# FASCICULE DE BREVET EUROPEEN

(11) **EP 0 359 664 B1**
(45) Date de publication et mention de la délivrance du brevet: **03.02.1993**
(21) Numéro de dépôt: 89402502.2
(22) Date de dépôt: 13.09.1989
(51) Int. Cl.: G01B 11/08

(54) **Dispositif de mesure d'une dimension transversale d'un objet sensiblement cylindrique**
Vorrichtung zum Messen einer Querabmessung eines im wesentlichen zylindrischen Objektes
Device for measuring a transverse dimension of a substantially cylindrical object

(30) Priorité: 16.09.1988 FR 8812092; 09.05.1989 FR 8906048
(43) Date de publication de la demande: 21.03.1990
(73) Titulaire: SOCIETE NATIONALE D'EXPLOITATION INDUSTRIELLE DES TABACS ET ALLUMETTES Société Anonyme française, 75340 Paris Cédex 07 (FR)
(72) Inventeur: Cholet, Georges, F-45000 Orleans (FR); Rousseau, Alain, F-45100 Orleans (FR)
(74) Mandataire: Bloch, Gérard

(56) Documents cités:
- EP-A- 0 007 836
- EP-A- 0 294 211
- DE-A- 3 521 444
- FR-A- 2 419 508
- US-A- 3 749 500
- US-A- 4 213 707
- US-A- 4 658 633
- TECHNISCHES MESSEN, vol. 54, no. 5, 1987, pages 173-179, Munich, DE; G. KLOTZ: "Hochgenaues Messen von rotationssymmetrischen Bauteilen in Fertigung und Qualitätssicherung. Teil 1: Messverfahren für Aussendurchmesser"
- J.E.E. JOURNAL OF ELECTRONIC ENGINEERING, vol. 19, no. 184, avril 1982, pages 46,47, Tokyo, JP; T. ICHIKAWA et al.: "Laser precision measurement becoming practical"

## Description

La présente invention a pour objet un dispositif de mesure d'au moins une dimension transversale d'un objet sensiblement cylindrique comprenant :
- des moyens pour engendrer un faisceau lumineux à rayons parallèles,
- des moyens pour maintenir ledit objet dans ledit faisceau lumineux, afin qu'il engendre une zone d'ombre de largeur égale à la dimension à mesurer, et
- des moyens de mesure de ladite largeur agencés pour la mesurer selon une direction orthogonale auxdits rayons parallèles.

Un tel dispositif est utilisé en particulier dans le domaine des tabacs, pour mesurer le diamètre de cigarettes, à des fins de contrôle de fabrication par exemple.

On notera ici que les moyens de mesure de la largeur de la zone d'ombre sont agencés pour mesurer cette largeur dans une direction donnée, perpendiculaire aux rayons parallèles et que, pour que la mesure de la largeur de la zone d'ombre soit représentative de la dimension transversale, ici le diamètre, de l'objet, il faut disposer celui-ci pour que son axe soit orthogonal à la fois aux rayons lumineux, et à la direction de mesure.

Un appareil comprenant les moyens de génération du faisceau lumineux, et les moyens de mesure de la largeur de la zone d'ombre est décrit dans le brevet FR-2 419 508. Dans cet appareil, le faisceau est engendré par une lampe à filament, associée à une lentille collimatrice, et un réseau de photodiodes permet d'effectuer la mesure d'épaisseur de la zone d'ombre.

Dans un autre appareil, commercialisé par la Société japonaise KEYENCE sous la référence LS 3030, le faisceau comprend un unique pinceau laser, ou rayon, qui se déplace parallèlement à lui-même, à vitesse élevée et constante. La mesure de la largeur de la zone d'ombre est effectuée en mesurant le temps pendant lequel le pinceau laser est interrompu. Dans cet appareil, le faisceau est pratiquement contenu dans un plan, qui est celui dans lequel l'épaisseur est mesurée.

Lorsque l'on mesure le diamètre de cigarettes avec un dispositif du type défini ci-dessus, il est possible de n'effectuer qu'une seule mesure de diamètre par cigarette. Toutefois, une cigarette n'approche que sensiblement la forme d'un cylindre circulaire parfait, et sa section n'est jamais rigoureusement un cercle. Aussi, il est fréquent, afin de bien caractériser chaque type de cigarette, par exemple pour déceler des imperfections dans son procédé de fabrication, de mesurer le diamètre de chaque cigarette dans une pluralité de directions, régulièrement réparties. A cet effet, on entraîne la cigarette en rotation autour de son axe, et l'on effectue une pluralité de mesures de l'épaisseur de la zone d'ombre correspondant à différentes orientations, ce qui permet de déterminer ainsi une pluralité de valeurs du diamètre variable de chaque cigarette.

Dans les dispositifs connus, le maintien de l'objet, en l'occurrence une cigarette, dans le faisceau lumineux d'un appareil du type qui vient d'être mentionné, ou d'un type voisin, pose les problèmes qui vont maintenant être exposés. Dans ces dispositifs, la cigarette à mesurer est disposée horizontalement et repose, sur la plus grande partie de sa longueur, sur un ensemble de deux rouleaux disposés côte à côte. La partie libre de la cigarette intercepte le faisceau, disposé pour que la direction de ses rayons soit contenue dans un plan vertical. Pour effectuer la mesure du diamètre dans une pluralité de directions, on entraîne les deux rouleaux dans le même sens et à la même vitesse, de façon à ce qu'ils entraînent la cigarette en rotation autour de son axe. Les inconvénients, au nombre de deux, sont les suivants.

Le premier inconvénient est lié à la position horizontale de la cigarette, qui rend difficile l'utilisation du dispositif dans une chaîne de dispositifs où la cigarette se déplace, d'un dispositif à l'autre, par gravité, et en restant toujours verticale. De façon connue, une telle chaîne comprend une succession de dispositifs de mesure, par exemple un dispositif de pesée, un dispositif de mesure de tirage et de ventilation, un dispositif de mesure de diamètre, et ainsi de suite. Ces différents dispositifs sont disposés les uns en dessous des autres, et chacun est agencé pour que sa mesure soit effectuée sur la cigarette disposée verticalement, celle-ci pénétrant par le haut dans le poste de mesure, et en ressortant par le bas. Dans ce cas, le trajet de la cigarette, d'un bout à l'autre de la chaîne est une droite verticale. Ainsi sont évités de complexes et coûteux systèmes d'acheminement de la cigarette d'un poste à l'autre, et aussi une perte de temps entre un poste et l'autre. Un dispositif de mesure de diamètre du type à rouleaux horizontaux ne peut donc être inséré dans une telle chaîne qu'au prix de l'utilisation d'un système pour faire passer la cigarette de la position verticale à la position horizontale, pour la déposer sur les rouleaux, la reprendre après mesure, et la remettre en position verticale. L'utilisation d'un tel système annule alors une bonne partie des avantages de la chaîne à déplacement longitudinal vertical des cigarettes.

Le deuxième inconvénient du système à rouleaux horizontaux est que l'angle de rotation de la cigarette, pour un angle donné de rotation des rouleaux, dépend du diamètre de la cigarette. Il est donc impossible de prévoir la quantité exacte dont va tourner la cigarette, et donc de répartir régulièrement les directions de mesure.

Pour faire tourner la cigarette sur elle-même, notamment en position verticale, tout en contrôlant son angle de rotation de façon simple, et indépendante de son diamètre, on peut envisager l'utilisation d'un support tournant autour d'un axe, pourvu de languettes élastiques, ou encore d'un joint gonflable agissant à la manière d'un sphincter, pour maintenir la cigarette de façon à ce que son axe soit confondu avec l'axe de rotation du support. Si celui-ci est vertical, le faisceau est disposé pour que la direction de ses rayons soit contenue dans un plan horizontal. Il s'avère toutefois que de tels dispositifs ne donnent pas satisfaction dans la mesure où les languettes, ou le joint, ne parviennent pas, en fait, à maintenir l'axe de la cigarette en position rigoureusement verticale. Ceci fait que lorsque le support tourne, l'axe de la cigarette décrit en réalité un cône d'axe vertical. Il en résulte une erreur dans la mesure des diamètres, car la direction de mesure de l'épaisseur de la zone d'ombre, contenue dans un plan horizontal, ne reste pas en permanence orthogonale à l'axe de la cigarette.

Par ailleurs, dans le cas où l'on ne mesure qu'une valeur de diamètre par cigarette comme dans le cas où l'on en mesure une pluralité relative à la même section, il n'est pas tenu compte des causes qui peuvent affecter la régularité de ce diamètre d'une section à l'autre de la cigarette. Ceci suppose implicitement que les variations axiales des dimensions de la cigarette sont nulles, ce qui n'est pas nécessairement le cas. Il en résulte un risque d'erreur dans l'appréciation du diamètre, si par exemple la mesure est effectuée dans une section déformée à la suite d'un choc ou d'une raison analogue, ou encore dans une section où une particule de papier en partie arrachée se trouve en saillie par rapport au corps de la cigarette, augmentant ainsi l'épaisseur de la zone d'ombre, et donc le diamètre mesuré.

La présente invention vise à pallier les inconvénients précédents.

A cet effet, elle a tout d'abord pour objet un dispositif du type défini ci-dessus, caractérisé par le fait que :
- lesdits moyens de maintien comprennent un support pourvu d'un trou cylindrique apte à être traversé, pendant la mesure, par ledit objet, la hauteur dudit trou cylindrique étant supérieure à sensiblement un tiers de la hauteur dudit objet, la génératrice du trou cylindrique ayant une direction fixe, et des moyens pour pousser ledit objet contre la paroi dudit trou cylindrique, de telle sorte qu'il en résulte la coïncidence d'au moins une génératrice dudit trou cylindrique avec une portion substantielle d'une génératrice dudit objet, et,
- lesdits moyens de mesure de largeur sont agencés pour mesurer la largeur de la zone d'ombre selon une direction orthogonale auxdites génératrices.

Dans le dispositif de l'invention, l'objet est immobilisé contre la paroi du trou cylindrique et la direction de son axe est rigoureusement la même que la direction fixe de la génératrice du trou cylindrique, orthogonale à la direction de mesure de la largeur. La mesure effectuée est donc rigoureuse. En effet, la hauteur du trou cylindrique étant égale à une partie substantielle de la hauteur de l'objet, et par partie substantielle, il faut entendre ici une partie supérieure à sensiblement un tiers, les deux génératrices coïncident sur une longueur assez grande pour que l'on puisse considérer leurs deux directions comme confondues. De plus, les frottements entre l'objet et le trou cylindrique, sous l'action de la pression exercée par les moyens de poussée, sont suffisants pour immobiliser l'objet, même lorsque le trou cylindrique est disposé verticalement et que l'objet est soumis à l'action de son propre poids.

Avantageusement, il est prévu des moyens pour entraîner ledit support en rotation, de façon à ce que ledit trou cylindrique tourne sensiblement sur lui-même.

Dans ce cas, le mouvement de l'objet à mesurer représente la superposition de deux mouvements élémentaires.

Le premier mouvement élémentaire est le mouvement de l'axe de l'objet à mesurer, qui, contrairement à ce qui se passe dans les dispositifs de l'art antérieur, ne reste pas immobile. Ce premier mouvement élémentaire fait que l'axe de l'objet décrit un cylindre circulaire centré sur l'axe de rotation du trou cylindrique. Le deuxième mouvement élémentaire est une révolution de l'objet autour de son axe, qui est synchrone de la révolution du trou cylindrique autour du sien. En d'autres termes, lorsque le trou cylindrique a fait un tour, l'objet a fait également un tour. Etant donné que le premier mouvement élémentaire se traduit par une oscillation latérale de la zone d'ombre dans le faisceau, qui reste sans influence sur l'épaisseur de la zone d'ombre, il apparaît que, du point de vue de la mesure du diamètre, tout se passe comme si seul le deuxième mouvement élémentaire avait lieu. Ceci est bien le but recherché pour mesurer ce diamètre dans une pluralité de directions directement liées aux différentes positions du trou cylindrique, et donc, dans le cas d'un objet de diamètre variable, indépendantes du diamètre de l'objet.

Avantageusement, lesdits moyens de poussée comprennent une pluralité d'orifices pratiqués dans ledit trou cylindrique, et des moyens pneumatiques pour aspirer ou souffler de l'air pas lesdits orifices.

Dans ce cas, il est simple de commander les moyens pneumatiques pour maintenir ou non l'objet, ce qui facilite l'automatisation du dispositif pour le traitement rapide d'une suite d'objets.

Avantageusement encore, lesdits moyens de poussée comprennent une unique rangée d'orifices pratiqués dans ledit trou cylindrique le long d'une génératrice, et des moyens pneumatiques pour aspirer de l'air par lesdits orifices.

Cette forme de réalisation est particulièrement simple et sûre.

Avantageusement encore, il est prévu des moyens de mesure de la pression de l'air en aval desdits orifices, et des moyens d'alarme, déclenchables par lesdits moyens de mesure de pression lorsque lesdits moyens d'aspiration sont en fonctionnement et que la pression mesurée est supérieure à un seuil.

Dans ce cas, si l'objet est mal positionné, l'alarme est déclenchée pour avertir l'opérateur. Il n'y a donc pas de possibilité de mesures fausses.

Dans une forme de réalisation particulièrement avantageuse,
- ledit support est disposé pour que ledit trou cylindrique soit vertical,
- il est prévu des moyens pour entraîner ledit support en rotation à vitesse constante, de façon à ce que ledit trou cylindrique tourne sensiblement sur lui-même,
- il est prévu des moyens pour laisser tomber ledit objet en position verticale dans ledit trou cylindrique entraîné en rotation,
- il est prévu des moyens pour commander lesdits moyens pneumatiques pour maintenir ledit objet pendant au moins un intervalle de temps égal à la durée d'un demi-tour de la rotation dudit trou cylindrique, et, pour mémoriser une suite de valeurs de ladite épaisseur mesurées pour une suite d'instants régulièrement répartis le long dudit intervalle de temps.

Un tel dispositif peut être inséré dans une chaîne à déplacement longitudinal vertical des objets, pour traiter, à grande cadence, une sucession d'objets.

A titre de perfectionnement supplémentaire, le dispositif de mesure peut en outre comprendre des moyens de déplacement relatif dudit objet par rapport audit faisceau, selon un mouvement oscillatoire de direction parallèle à l'axe dudit objet, afin de mesurer ladite dimension transversale pour une pluralité de sections dudit objet.

Dans ce cas, le risque d'erreur dû à une irrégularité du diamètre apparent de la cigarette le long de son axe est considérablement réduit puisqu'on dispose d'une pluralité de valeurs du diamètre pour différentes sections. Il suffit de calculer la moyenne de ces valeurs pour diminuer notablement l'influence d'une valeur aberrante et si l'on désire éliminer totalement une telle valeur, il est possible de le faire par des méthodes connues de comparaison et d'élimination de toute valeur trop éloignée de la valeur moyenne.

Dans le cas où l'objet est entraîné en rotation, il est ainsi possible de mesurer une pluralité de valeurs du diamètre de chaque cigarette, ces valeurs étant obtenues pour différentes sections, et pour différentes orientations de chaque section. La pluralité de valeurs mesurées contient ainsi des informations relativement complètes.

Avantageusement, le déplacement parallèle à l'axe de l'objet est un mouvement oscillatoire périodique de demi-période sensiblement égale à la durée d'un tour de ladite rotation ou à un sous multiple de celle-ci.

Dans ce cas, on obtient une répartition régulière, sur la portion analysée de chaque cigarette, des diamètres dont la valeur est mesurée. La portion analysée correspond à celle qui se trouve balayée par le faisceau lors du déplacement oscillatoire de l'objet le long de son axe. Après un ou plusieurs tours de rotation de l'objet sur lui-même, on obtient une pluralité de mesures régulièrement réparties axialement et radialement. Un simple calcul de la moyenne de ces valeurs permet d'obtenir, pour le diamètre de la cigarette, une valeur pour laquelle la contribution de chacune des sections et de chacune des directions est la même, et qui est donc bien représentative.

Dans une forme de réalisation, ledit faisceau est immobile selon ladite direction parallèle à l'axe dudit objet, et lesdits moyens de déplacement déplacent lesdits moyens de maintien.

Dans une autre forme de réalisation, lesdits moyens de maintien sont immobiles selon ladite direction parallèle à l'axe dudit objet, et lesdits moyens de déplacement déplacent ledit faisceau.

Dans ce cas, et avantageusement, lesdits moyens de déplacement comprennent une lame transparente à faces parallèles, disposée sur le trajet dudit faisceau, et des moyens pour entraîner ladite lame en pivotement.

Bien que le perfectionnement concernant le déplacement relatif de l'objet et du faisceau selon une direction parallèle à l'axe de l'objet soit normalement associé au maintien de l'objet à l'aide d'un trou cylindrique et de moyens de poussée appropriés, son utilisation avec d'autres types de maintien de l'objet n'est cependant pas exclue.

La présente invention sera mieux comprise grâce à la description suivante des formes de réalisation préférées du dispositif de l'invention, faite en se référant aux dessins annexés, sur lesquels,
- la figure 1 représente une vue schématique en perspective d'une première forme de réalisation du dispositif de l'invention,
- la figure 2 représente une vue de dessus schématique du support du dispositif de la figure 1,
- la figure 3 est une vue en élévation, en coupe partielle, d'une partie du dispositif de la figure 1, au cours d'une phase de réception d'un objet à mesurer,
- la figure 4 est une vue analogue à celle de la figure 3, au cours d'une phase de mesure de l'objet reçu,
- la figure 5 est une vue analogue à celle des figures 3 et 4, au cours d'une phase d'évacuation de l'objet mesuré,
- la figure 6 est une vue en élévation, en coupe partielle, d'une partie d'une deuxième forme de réalisation du dispositif de l'invention,
- la figure 7 est une vue en perspective partielle du dispositif de la figure 6,
- la figure 8 est une vue en élévation, en coupe partielle, d'une troisième forme de réalisation du dispositif de l'invention, et,
- la figure 9 est une vue schématique d'une quatrième forme de réalisation du dispositif de l'invention.

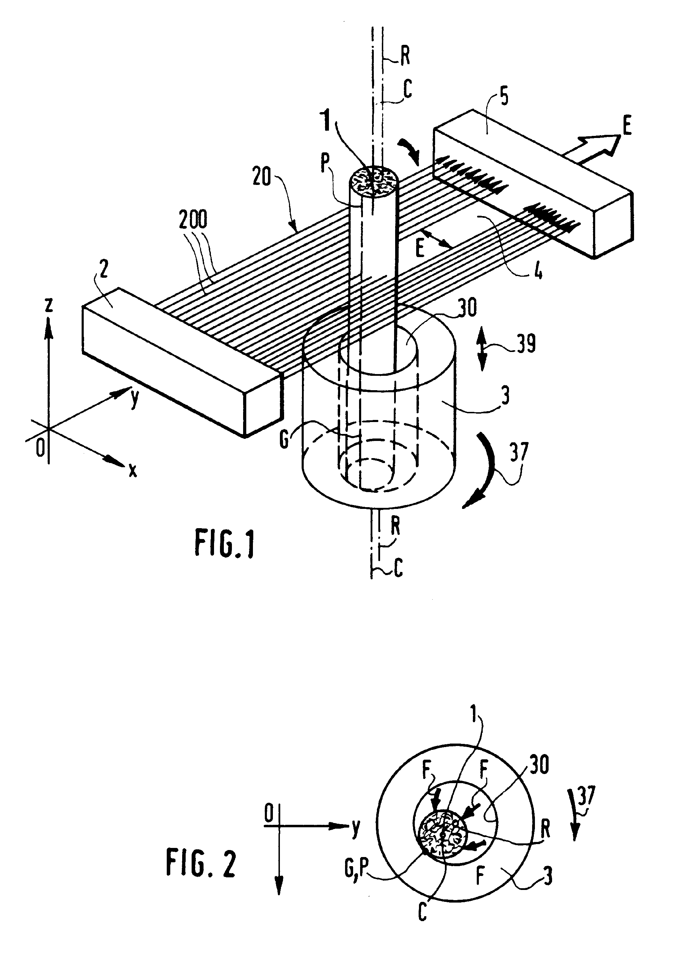

En se référant à la figure 1, un dispositif de mesure d'une dimension transversale, ici le diamètre, d'un objet sensiblement cylindrique, ici une cigarette, est maintenant décrit.

De façon connue, ce dispositif comprend un générateur d'un faisceau 20 de rayons parallèles 200, un récepteur 5 de ce faisceau 20, et un support 3 pour maintenir une cigarette 1 dans le faisceau lumineux 20 de façon à ce que la zone d'ombre 4 engendrée par celle-ci ait une épaisseur E égale au diamètre à mesurer de la cigarette 1.

Ici, le faisceau 20 a la forme d'une nappe plane s'étendant dans le plan horizontal xOy d'un repère orthonormé Ox, Oy, Oz. La direction des rayons parallèles 200 est la direction Oy, et le faisceau s'étend, selon la direction Ox, sur une largeur nettement supérieure au diamètre à mesurer.

Le récepteur 5 est disposé pour recevoir le faisceau 200 sur toute sa largeur et agencé, de façon connue, pour mesurer la largeur E, selon la direction Ox, de la zone d'ombre 4 engendrée par la cigarette 1.

Le support 3 est ici un cylindre circulaire d'axe R parallèle à la direction Oz, dans lequel est pratiqué un trou cylindrique, ici un alésage 30 en forme de cylindre circulaire, également d'axe R. Le diamètre de l'alésage 30 est supérieur au diamètre maximal la cigarette 1, et la hauteur du cylindre 3, et donc de l'alésage 30 est égale à une partie substantielle, ici sensiblement la moitié, de la hauteur de la cigarette 1. Cette valeur de la hauteur de l'alésage, égale à la moitié de la hauteur de la cigarette, n'est pas critique, mais comme cela sera mieux compris dans la suite, il est souhaitable que la hauteur de l'alésage reste supérieure à une partie substantielle, de l'ordre du tiers, de la hauteur de la cigarette 1.

La cigarette 1 est disposée pour traverser l'alésage 30 et, d'une façon qui sera mieux comprise dans la suite, et qui est schématisée par les flèches F de la figure 2, elle est soumise à des forces qui la poussent contre la paroi de l'alésage 30. Il en résulte alors, de façon évidente, qu'une génératrice P de la cigarette 1 coïncide, sur sa portion substantielle qui traverse l'alésage 30, avec une génératrice G de cet alésage.

La figure 2 montre une vue de dessus de la cigarette 1 avec l'alésage 30 du support 3, ainsi que les points de passage de l'axe R, des génératrices G et P, et de l'axe C de la cigarette.

On comprend que, du fait de la coïncidence entre les génératrices G et P, la direction de l'axe C de la cigarette 1 est rigoureusement celle des génératrices G et P et de l'axe R, c'est-à-dire la direction de l'axe Oz.

Ainsi, grâce à des forces de poussée latérale, c'est-à-dire vers la paroi de l'alésage 30, qui, comme cela sera mieux compris dans la suite, sont relativement simples à mettre en oeuvre, on parvient non seulement à immobiliser la cigarette 1, mais également à lui imposer de s'orienter rigoureusement selon la direction Oz, de façon à ce que la mesure de l'épaisseur E, effectuée par le récepteur 5 suivant la direction Ox, représente effectivement le diamètre de la cigarette 1.

Pour effectuer une pluralité de mesures du diamètre de la cigarette 1 dans différentes directions orthogonales à son axe C, il suffit d'entraîner en rotation, autour de son axe R, le support 3, comme le montre la flèche 37. Il en résulte un mouvement complexe de la cigarette 1, du fait que son axe C, non confondu avec l'axe R, se déplace sur un cylindre d'axe R. Il en résulte un mouvement oscillatoire de la projection de la cigarette 1 selon Ox, qui ne perturbe cependant pas la mesure du diamètre, pourvu que la cigarette 1 ne sorte pas du faisceau 20, ce qui est le cas si la largeur de celui-ci est supérieure au diamètre de l'alésage 30.

Le mouvement de rotation de la cigarette 1 sur elle même peut être décomposé en deux mouvements élémentaires. Le premier mouvement élémentaire fait que l'axe C de la cigarette décrit un cylindre circulaire centré sur l'axe de rotation R du trou cylindrique. Le deuxième mouvement élémentaire est une révolution de la cigarette autour de son axe, qui est synchrone de la révolution du trou cylindrique autour du sien. En d'autres termes, lorsque le trou cylindrique a fait un tour, la cigarette fait également un tour. Etant donné que le premier mouvement élémentaire se traduit par une oscillation latérale de la zone d'ombre dans le faisceau, qui reste sans influence sur l'épaisseur de la zone d'ombre, il apparaît que, du point de vue de la mesure du diamètre, tout se passe comme si seul le deuxième mouvement élémentaire avait lieu. Ceci est bien le but recherché pour mesurer ce diamètre dans une pluralité de directions directement liées aux différentes positions du trou cylindrique.

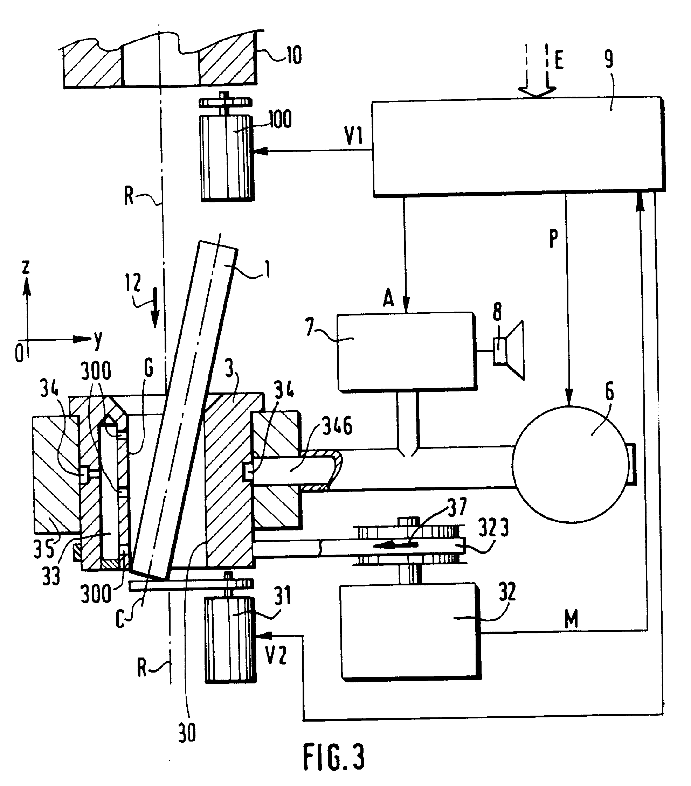

En référence aux figures 3, 4 et 5, on décrit maintenant une première forme de réalisation du dispositif de l'invention, dans lequel les forces de poussée de la cigarette 1 comprennent une pluralité d'orifices 300 pratiqués dans l'alésage 30, le long de la génératrice G, et une pompe aspirante 6, pour aspirer de l'air par lesdits orifices.

A cet effet, les orifices 300 communiquent avec un conduit 33, pratiqué dans l'épaisseur des parois du support 3, qui communique lui-même avec une gorge annulaire 34, pratiquée dans la paroi externe du support 3.

Le support 3 est monté dans un manchon fixe 35, à l'intérieur duquel il peut pivoter, et dans lequel est pratiqué un conduit 346, qui met en communication, en permanence, la gorge 34 et la pompe aspirante 6.

Un vacuomètre 7 est prévu, pour mesurer la pression résiduelle dans le conduit 346, c'est-à-dire la pression en aval des orifices 300. Il est relié à une alarme 8, de façon à la déclencher si la pression mesurée dans le conduit 346 est supérieure à un seuil.

Un ensemble 32, comprenant un moteur et un réducteur, est prévu pour entraîner, par l'intermédiaire d'une courroie 323, le support 3 en rotation autour de son axe R.

Un dispositif 31 est prévu pour obturer l'ouverture inférieure de l'alésage 30. Le dispositif 31 comprend, de façon connue, un volet commandable qui ferme, ou ouvre, l'ouverture inférieure de l'alésage 30.

Un dispositif 100, analogue par exemple au dispositif 31, est prévu pour obturer l'ouverture inférieure d'un alésage 10, d'axe R, disposé au-dessus de l'alésage 30, et qui représente la partie inférieure d'un poste d'alimentation en cigarettes, ou encore d'un poste de mesure de poids ou d'un autre paramètre, dans lequel chaque cigarette est disposée verticalement dans l'alésage 10.

Un circuit électronique de commande 9, par exemple à microprocesseur, reçoit, en provenance du récepteur 5, un signal E représentatif de l'épaisseur de la zone d'ombre mesurée, et, en provenance de l'ensemble 32 un signal M représentatif du déplacement en rotation de son arbre de sortie, donc du support 3.

Le circuit 9 délivre des signaux de commande V1 et V2 des dispositifs d'obturation 100 et 31 respectivement, un signal de commande A du vacuomètre 7, et un signal de commande P de la pompe aspirante 6.

Le dispositif qui vient d'être décrit fonctionne comme suit.

L'ensemble 32 d'entraînement du support 3 est agencé pour l'entraîner en permanence, et à vitesse constante, autour de son axe R, comme le montrent les flèches 37.

En référence maintenant à la figure 3, la phase de réception de l'objet est décrite. Au cours de cette phase, le circuit 9 commande l'arrêt de la pompe 6, inhibe le vacuomètre 7, ferme le dispositif d'obturation 31 et ouvre le dispositif 100, de façon à laisser tomber la cigarette 1, selon la flèche 12, en position verticale, depuis l'alésage 10 vers l'alésage 30 entraîné en rotation 37. Comme la cigarette 1 tombe le long de l'axe R, et que le diamètre de l'alésage 30 est supérieur à celui de la cigarette 1, celle-ci vient se positionner pour traverser l'alésage, et elle est arrêtée par le volet du dispositif 31. Pour faciliter cette opération, l'ouverture supérieure de l'alésage 30 est évasée. Comme le diamètre de l'alésage 30 est supérieur à celui de la cigarette 1, cette dernière ne se trouve pas disposée, à priori, de telle sorte que son axe C soit parallèle à l'axe R.

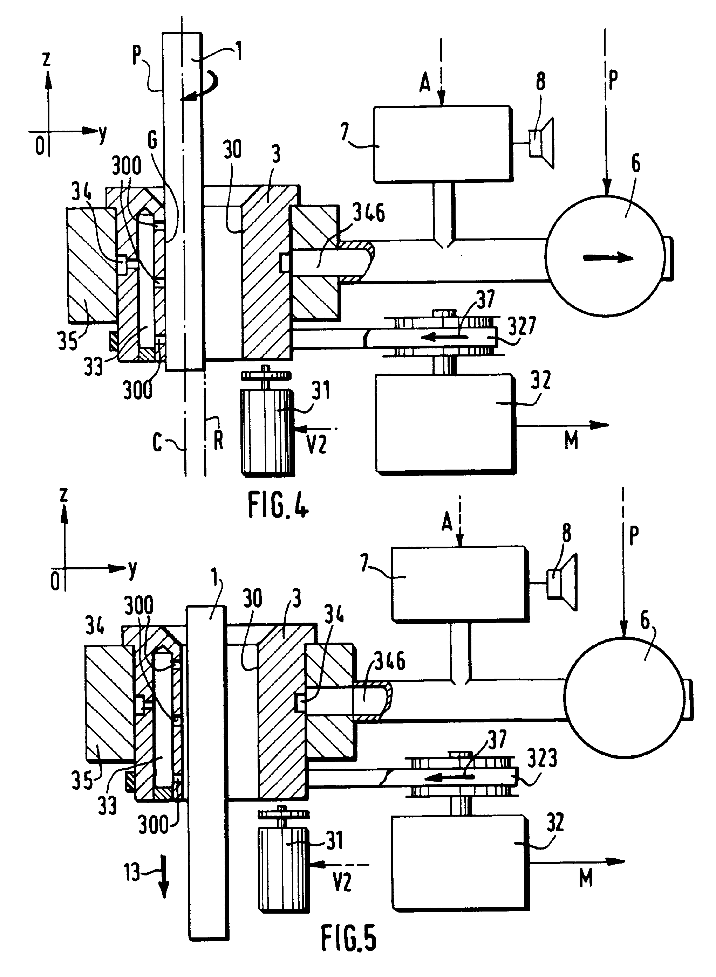

Cependant, pendant la phase de mesure, représentée sur la figure 4, le circuit 9 commande la pompe aspirante 6, et la différence de pression ainsi crée entre les orifices 300 et le reste du volume de l'alésage 30 a pour effet de pousser la cigarette 1 contre la génératrice G. Les orifices 300 se trouvent normalement bouchés par la cigarette 1, ce qui fait que la pression dans le conduit 346 est assez basse.

L'alarme 8 n'est pas déclenchée, par le vacuomètre 7, qui est mis en service par le circuit 9 au cours de la phase de mesure. Si, par contre, la cigarette 1 est mal positionnée, un orifice 300 au moins va se trouver libre, et la pression dans le conduit 346 ne pourra baisser suffisamment, ce qui aura pour effet de déclencher l'alarme 8. Au cours de la phase de mesure, le circuit 9 commande la pompe 6 pour que celle-ci fonctionne de façon à maintenir la cigarette 1 pendant un intervalle de temps égal à la durée d'un demi-tour, ou encore d'un tour complet, et il mémorise la suite de valeurs du signal E mesurés pour une suite d'instants régulièrement répartis le long de cet intervalle de temps, afin d'obtenir une suite de valeurs du diamètre dans des directions régulièrement réparties. Sans que cela soit obligatoire, le circuit 9 peut commander le volet du dispositif 31 afin qu'il dégage l'ouverture inférieure pendant la phase de mesure, de façon à éviter les frottements de l'extrémité inférieure de la cigarette 1.

Au cours de la phase d'évacuation de la cigarette 1, représentée sur la figure 5, le volet du dispositif 31 étant ouvert, le circuit 9 commande l'arrêt de la pompe, ce qui a pour effet la chute de la cigarette, selon la flèche 13, vers le poste de travail suivant, ou vers un panier récepteur.

Une nouvelle mesure peut alors être effectuée, et ainsi de suite.

On notera qu'avec un tel dispositif, le support 3 reste entraîné en permanence en rotation, et n'a pas à être arrêté entre le départ d'une cigarette et l'arrivée de la suivante. Ceci est un avantage important, notamment dans la mesure où sa vitesse reste ainsi rigoureusement constante sans perte de temps pour la mise en vitesse du support et son arrêt entre chaque cigarette.

A titre d'exemple, le diamètre de l'alésage 30 est ici de 10 mm, ce qui permet, avec trois orifices 300 de sensiblement 1 mm de diamètre, soumis à une dépression de 500 mbars, de maintenir des cigarettes dont le diamètre est compris entre sensiblement 4 mm et sensiblement 9 mm.

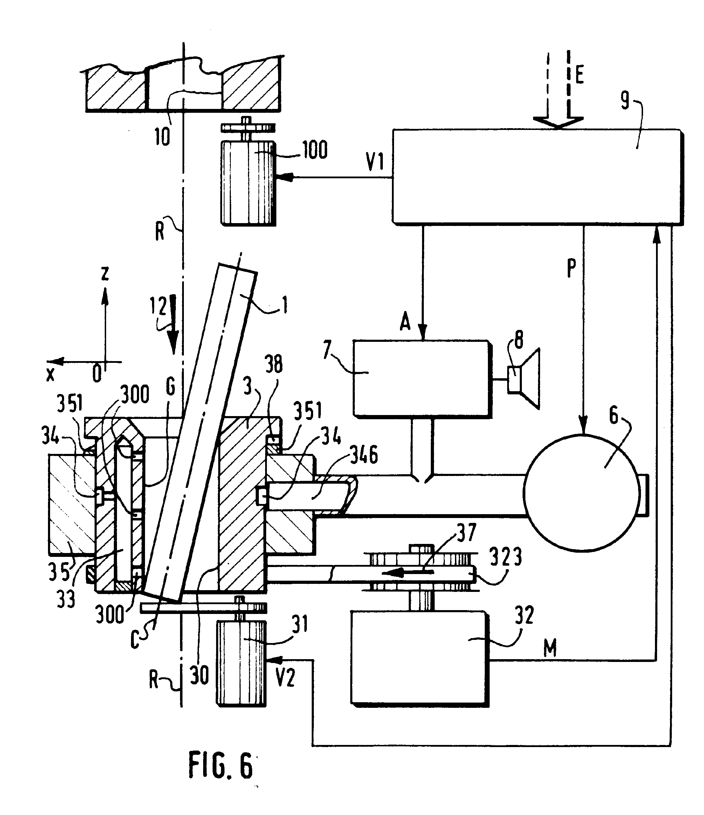

En référence aux figures 6 à 9, trois autres formes de réalisation du dispositif de l'invention sont maintenant décrites, qui effectuent une pluralité de mesures du diamètre de la cigarette 1 dans différentes directions orthogonales à son axe C, et pour des sections d'abcisses différentes le long de cet axe. A cet effet, le support 3 est entraîné non seulement en rotation autour de son axe R, comme cela a été décrit, mais également en translation oscillatoire de direction parallèle à cet axe, comme indiquée par les flèches 39 de la figure 1.

En plus du mouvement oscillatoire selon Ox de la projection de la cigarette sur le plan xOz, mouvement qui a été décrit, il en résulte un deuxième mouvement oscillatoire, selon Oz, de la projection de la cigarette sur le plan xOz. Ces mouvements ne perturbent cependant pas la mesure du diamètre, pourvu que la cigarette 1 ne sorte pas du faisceau 20, ce qui est le cas si la largeur de celui-ci est supérieure au diamètre de l'alésage 30, et si l'amplitude du mouvement selon Oz reste modérée.

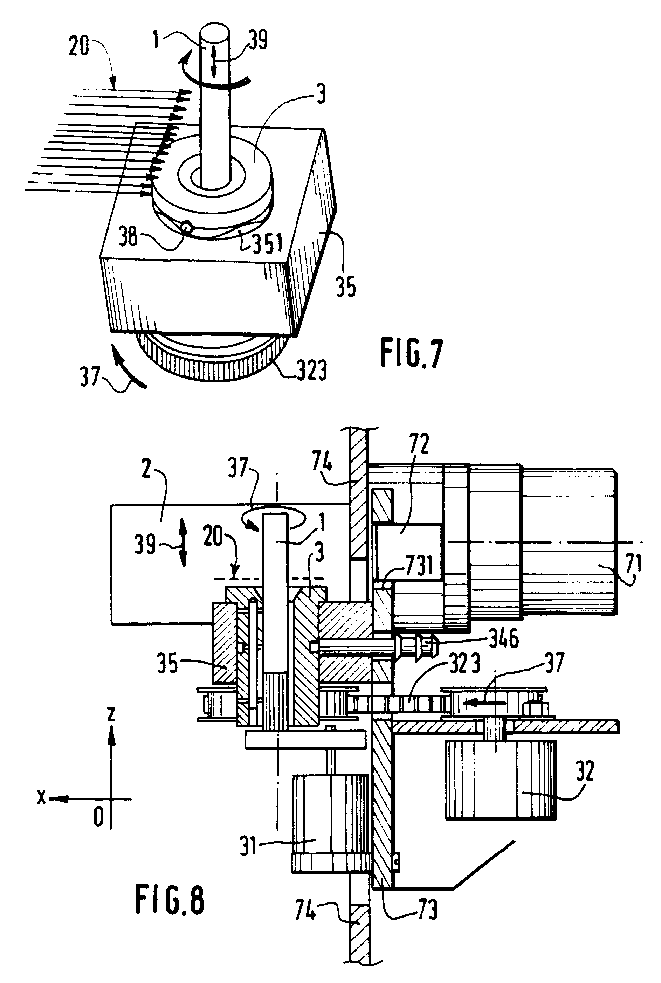

En référence plus particulièrement aux figures 6 et 7, la deuxième forme de réalisation du dispositif de l'invention est maintenant décrite.

Dans ce dispositif, le mouvement oscillatoire selon l'axe C est lié au mouvement de rotation du support 3 autour de son axe.

A cet effet, le dispositif des figures 6 et 7 se distingue de celui des figures 3, 4 et 5 par le fait que le support 3 est monté coulissant, selon l'axe Oz, dans le manchon fixe 35, et il est pourvu, dans sa partie supérieure disposée hors du manchon 35, d'un doigt 38 qui s'étend radialement, et qui coopère avec une bague 351, ici de même diamètre que le diamètre intérieur du manchon 35, et disposée autour de son orifice supérieur. La face supérieure de la bague 351 est ici de profil sinusoïdal.

Lorsque le support 3 est entraîné en rotation à vitesse constante, autour de son axe R, comme le poids du support 3 fait que le doigt 38 reste en permanence en contact avec la bague 351 de profil sinusoïdal, il en résulte un mouvement oscillatoire du support 3, de direction Oz. Ainsi la cigarette 1 se trouve entraînée, relativement au faisceau 20, en déplacement de direction parallèle à son axe, ce qui permet la mesure de son diamètre pour une pluralité de ses sections. Ce mouvement est schématisé sur les figures par les flèches 39. Il est ici oscillatoire périodique, de demi-période égale à un sous multiple de la durée d'un tour de la rotation de la cigarette 1 sur elle-même, c'est-à-dire de la rotation 37 du support 3, car plusieurs périodes de variation du profil de la bague 351 sont comprises dans sa circonférence.

Au cours de la phase de mesure, le circuit 9 commande la pompe 6 pour que celle-ci fonctionne de façon à maintenir la cigarette 1 pendant un intervalle de temps égal à la durée d'un demi-tour, ou encore d'un tour complet, et il mémorise la suite de valeurs du signal E mesurés pour une suite d'instants régulièrement répartis le long de cet intervalle de temps, afin d'obtenir une suite de valeurs du diamètre dans des directions régulièrement réparties autour de l'axe C de la cigarette 1 et pour des sections de cette cigarette régulièrement réparties le long de cet axe C, dans sa portion balayée par le faisceau 20.

En référence à la figure 8, une troisième forme de réalisation du dispositif de l'invention est maintenant décrite. Cette forme de réalisation comprend le même support 3 que précédemment, à l'intérieur duquel la cigarette 1 est maintenue par aspiration. Toutefois, le support 3 n'est pas ici pourvu d'un doigt suiveur comme le doigt 38, et il n'est pas prévu, sur le manchon 35, une bague à profil sinusoïdal comme la bague 351. C'est une simple collerette annulaire plane du support 3 qui coopère avec la face supérieure du manchon 35 qui assure le positionnement vertical du support 3, comme pour le dispositif de la figure 3. La position verticale relative du support et du manchon est donc invariable. Pour produire le déplacement relatif de la cigarette 1 par rapport au faisceau 20, selon la direction Oz, c'est le manchon 35 et son ensemble d'entraînement 32 qui sont déplacés.

A cet effet, le manchon 35 et son ensemble d'entraînement 32 sont fixés sur une plaque 73 montée mobile par rapport à un châssis fixe 74, grâce à un ensemble de guidage vertical par tiges et roulements, ensemble non représenté dans un souci de simplicité. Le générateur 2 du faisceau 20 est monté fixe sur le châssis 74. La plaque 73 est animée, relativement au châssis 74, d'un mouvement alternativement ascendant et descendant, grâce à un moteur 71 dont l'axe est pourvu d'un excentrique 72 qui coopère avec une lumière 731 de la plaque 73.

Avec ce dispositif, le mouvement de va et vient vertical, schématisé par les flèches 39, et le mouvement de rotation, schématisé par la flèche 37, sont commandables indépendamment l'un de l'autre. En pratique, si l'on désire obtenir une répartition régulière des mesures, il est préférable de prévoir que le mouvement oscillatoire vertical soit de demi-période sensiblement égale à la durée d'un tour de la rotation, ou à un sous multiple de celle-ci. Dans le cas où la demi-période du mouvement oscillatoire vertical est sensiblement égale à un tour de rotation, la suite des diamètres mesurés est répartie de façon hélicoïdale sur la portion de cigarette balayée par le faisceau laser.

Avec ce dispositif, il est également possible d'obtenir un déplacement vertical pas à pas de la cigarette 1, si le moteur 71 est un moteur pas à pas. Les mesures de diamètre sont alors effectuées dans des sections distantes d'un pas moteur. Le déplacement vertical et la rotation sont avantageusement synchronisés pour scruter chaque section sur un nombre entier de tours de la cigarette 1. Un cas limite est celui où le nombre de pas est égal à deux, et où la cigarette 1 est alors animée d'un mouvement vertical dont les variations temporelles sont des signaux carrés, deux sections seulement de la cigarette se trouvant ainsi scrutées.

Dans les deux formes de réalisation précédentes, le faisceau 20 est immobile selon l'axe Oz et c'est le support 3 qui est déplacé le long de cet axe.

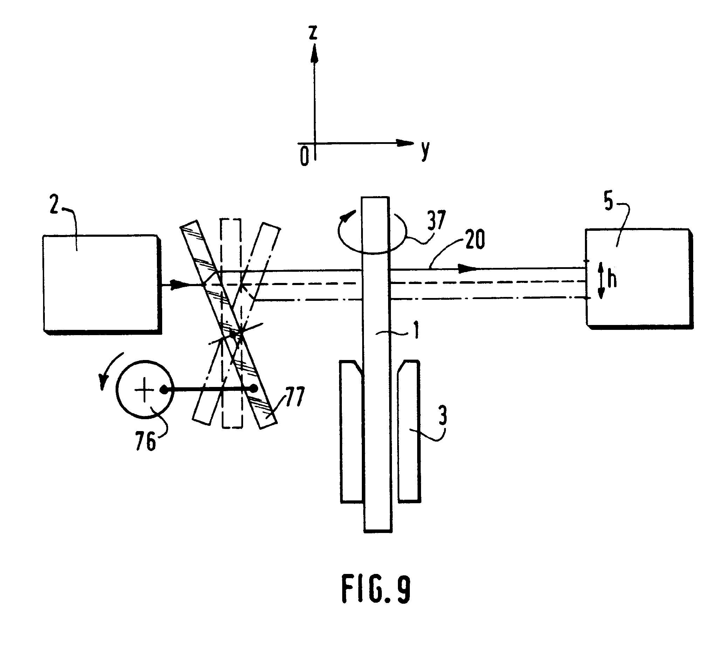

Dans la quatrième forme de réalisation du dispositif, représentée sur la figure 9, la position du support 3 relativement à l'axe Oz est fixe, et c'est le faisceau 20 qui se trouve déplacé par une lame transparente 77 à faces parallèles, ici en verre, disposée sur son trajet, en amont de la cigarette 1. La lame 77 est montée pivotante autour d'un axe parallèle à l'axe Ox, et entraînée en pivotement par une bielle et une manivelle reliées à un moteur 76. Lorsque la lame 77 est perpendiculaire au faisceau 20, celui-ci n'est pas dévié, mais lorsque la lame 77 est inclinée par rapport au faisceau 20, celui-ci subit une translation verticale, du fait des réfractions se produisant sur les faces parallèles de la lame 77. Sur la figure 9, l'amplitude h du déplacement ainsi obtenu a été représentée. Ici, le récepteur 5 est pourvu d'une zone sensible au faisceau de hauteur supérieure à h et il n'est pas nécessaire de dévier à nouveau le faisceau 20 après scrutation de la cigarette 1, pour le ramener dans cette zone sensible.

Naturellement, il est possible, avec le dispositif de la figure 9, d'obtenir des déplacements relatifs de la cigarette 1 et du faisceau 20 continus, pas à pas ou synchronisés avec la rotation du support 3, comme avec les dispositifs précédents, et avec un dispositif mécanique relativement simple. Il serait évidemment possible de remplacer la lame 77 oscillante par tout dispositif de déviation optique approprié, permettant le déplacement vertical du plan du faisceau 20.

Dans la description qui précède, on a toujours considéré que l'objet à mesurer était entraîné en même temps en translation verticale et en rotation sur lui-même. Si le mouvement de rotation est commode et bien adapté lorsque l'objet est une cigarette qui est un cylindre circulaire imparfait, il n'est cependant pas obligatoire.

Naturellement, la présente invention n'est pas limitée à l'utilisation d'une rangée d'orifices et d'une pompe aspirante pour pousser la cigarette contre la paroi de l'alésage. C'est ainsi que l'on peut utiliser un autre type de moyens pneumatiques. Par exemple, il serait possible de remplacer la pompe aspirante par un dispositif de soufflage relié à une source d'air comprimé. Dans ce cas, la cigarette 1 sera toujours poussée par une différence de pression, mais contre la génératrice de l'alésage opposée à celle qui comprend les orifices. Dans ce cas, il peut être souhaitable de prévoir des orifices le long de plusieurs génératrices. De même, on peut prévoir, à l'intérieur de l'alésage 3, une série de petits ballons gonflables pour pousser la cigarette contre la paroi, ou encore une série de languettes commandables par des moyens mécaniques, étant entendu que dans tous les cas, la disposition de ces éléments est telle que la cigarette occupe une position décentrée dans l'alésage, pour qu'une de ses génératrices se trouve en contact avec une génératrice de l'alésage.

Dans la description qui précède, on a pris l'exemple d'une cigarette et d'un trou cylindrique, ou alésage, tous deux en forme de cylindres circulaires. L'invention s'applique évidemment également au cas de filtres pour cigarettes et d'autres objets en forme de tige, et même à la mesure de la dimension transversale de tout objet cylindrique, que sa base soit circulaire ou non.

Ainsi, selon la forme de l'objet à mesurer, le trou cylindrique peut être en forme de cylindre non circulaire, par exemple à base elliptique, hexagonale, ou autre. Dans ce cas, plusieurs génératrices de l'objet peuvent coïncider avec plusieurs génératrices du trou cylindrique.

De même, on pourrait mettre en oeuvre le perfectionnement relatif au déplacement de l'objet selon une direction parallèle à son axe avec d'autres dispositifs de maintien que ceux qui ont été décrits, pneumatiques, ou même purement mécaniques.

## Revendications

1. Dispositif de mesure d'au moins une dimension transversale d'un objet (1) sensiblement cylindrique comprenant :
- des moyens (2) pour engendrer un faisceau lumineux (20) à rayons parallèles (200),
- des moyens (3) pour maintenir ledit objet (1) dans ledit faisceau lumineux (20), afin qu'il engendre une zone d'ombre (4) de largeur (E) égale à la dimension à mesurer, et,
- des moyens (5) de mesure de ladite largeur agencés pour la mesurer selon une direction orthogonale auxdits rayons parallèles (200),
dispositif caractérisé par le fait que :
- lesdits moyens de maintien comprennent un support (3) pourvu d'un trou cylindrique (30) apte à être traversé, pendant la mesure, par ledit objet (1), la hauteur dudit trou cylindrique (30) étant supérieure à sensiblement un tiers de la hauteur dudit objet (1), la génératrice du trou cylindrique (30) ayant une direction fixe, et des moyens (6, 300) pour pousser ledit objet (1) contre la paroi dudit trou cylindrique (30), de telle sorte qu'il en résulte la coïncidence d'au moins une génératrice (G) dudit trou cylindrique (30) avec une portion substantielle d'une génératrice (P) dudit objet (1), et,
- lesdits moyens (5) de mesure de largeur sont agencés pour mesurer la largeur (E) de la zone d'ombre (4) selon une direction orthogonale auxdites génératrices (G, P).

2. Dispositif selon l'une des revendications 1, dans lequel il est prévu des moyens (32) pour entraîner ledit support (3) en rotation, de façon à ce que ledit trou cylindrique (30) tourne sensiblement sur lui-même.

3. Dispositif selon l'une des revendications 1 ou 2, dans lequel lesdits moyens de poussée comprennent une pluralité d'orifices (300) pratiqués dans ledit trou cylindrique (30), et des moyens pneumatiques (6) pour aspirer ou souffler de l'air par lesdits orifices (300).

4. Dispositif selon la revendication 3, dans lequel lesdits moyens de poussée comprennent une unique rangée d'orifices (300) pratiqués dans ledit trou cylindrique (30) le long d'une génératrice (G), et des moyens pneumatiques (6) pour aspirer de l'air par lesdits orifices (300).

5. Dispositif selon la revendication 4, dans lequel il est prévu des moyens (7) de mesure de la pression de l'air en aval desdits orifices (300), et des moyens d'alarme (8), déclenchables par lesdits moyens de mesure de pression (7) lorsque lesdits moyens d'aspiration (6) sont en fonctionnement et que la pression mesurée est supérieure à un seuil.

6. Dispositif selon l'une des revendications 3 à 5, dans lequel :
- ledit support (3) est disposé pour que ledit trou cylindrique (30) soit vertical,
- il est prévu des moyens (32) pour entraîner ledit support (3) en rotation à vitesse constante, de façon à ce que ledit trou cylindrique (30) tourne sensiblement sur lui-même,
- il est prévu des moyens (100) pour laisser tomber ledit objet (1) en position verticale dans ledit trou cylindrique (30) entraîné en rotation,
- il est prévu des moyens (9) pour commander lesdits moyens pneumatiques (6) pour maintenir ledit objet (1) pendant au moins un intervalle de temps égal à la durée d'un demi-tour de la rotation dudit trou cylindrique (30), et pour mémoriser une suite de valeurs de ladite épaisseur (E) mesurées pour une suite d'instants régulièrement répartis le long dudit intervalle de temps.

7. Dispositif selon l'une des revendications 1 à 6, comprenant des moyens (38, 351; 71-73; 76, 77) de déplacement relatif dudit objet (1) par rapport audit faisceau (20), selon un mouvement oscillatoire de direction parallèle à l'axe dudit objet, afin de mesurer ladite dimension transversale pour une pluralité de sections dudit objet (1).

8. Dispositif selon la revendication 7, dans lequel il est prévu des moyens (32) pour entraîner en rotation lesdits moyens de maintien (3), de façon à ce que ledit objet (1) tourne autour de son axe, et ledit déplacement est un mouvement oscillatoire périodique de demi-période sensiblement égale à la durée d'un tour de ladite rotation ou à un sous multiple de celle-ci.

9. Dispositif selon l'une des revendications 7 ou 8, dans lequel ledit faisceau (20) est immobile selon ladite direction parallèle à l'axe dudit objet (1), et lesdits moyens de déplacement (38, 351; 71-73) déplacent lesdits moyens de maintien (3).

10. Dispositif selon l'une des revendications 7 ou 8, dans lequel lesdits moyens de maintien (3) sont immobiles selon ladite direction parallèle à l'axe dudit objet (1), et lesdits moyens de déplacement (76, 77) déplacent ledit faisceau (20).

11. Dispositif selon la revendication 10, dans lequel lesdits moyens de déplacement comprennent une lame transparente (77) à faces parallèles, disposée sur le trajet dudit faisceau (20), et des moyens (76) pour entraîner ladite lame (77) en pivotement.

## Patentansprüche

1. Vorrichtung zum Messen mindestens einer Querabmessung eines im wesentlichen zylindrischen Objektes (1), umfassend:
- Mittel (2) zur Erzeugung eines Lichtbündels (20) paralleler Strahlen (200),
- Mittel (3), um das Objekt (1) in dem Lichtbündel (20) festzuhalten, so daß es eine Schattenzone (4) mit einer Breite (E), die der zu messenden Abmessung entspricht, erzeugt, und
- Mittel (5) zur Messung dieser Breite, die so angeordnet sind, daß sie diese in einer zu den parallelen Strahlen (200) senkrechten Richtung messen,
Vorrichtung, dadurch gekennzeichnet, daß:
- die Haltemittel eine Halterung (3) umfassen, die mit einer zylindrischen Bohrung (30) versehen ist, welche während der Messung von dem Objekt (1) durchdrungen werden kann, wobei die Höhe der zylindrischen Bohrung (30) größer ist als im wesentlichen ein Drittel der Höhe des Objekts (1) und die Erzeugende der zylindrischen Bohrung (30) eine feststehende Richtung besitzt, sowie Mittel (6, 300), um das Objekt (1) gegen die Wand der zylindrischen Bohrung (30) zu drücken, so daß sich hieraus die Deckungsgleichheit mindestens einer Erzeugenden (G) der zylindrischen Bohrung (30) mit einem beträchtlichen Teil einer Erzeugenden (P) des Objektes (1) ergibt, und
- die Mittel (5) zur Breitenmessung so angeordnet sind, daß sie die Breite (E) der Schattenzone (4) in einer zu den Erzeugenden (G, P) senkrechten Richtung messen.

2. Vorrichtung nach Anspruch 1, bei der Mittel (32) vorgesehen sind, um die Halterung (3) zur Drehung anzutreiben, so daß sich die zylindrische Bohrung (30) im wesentlichen um sich selbst dreht.

3. Vorrichtung nach einem der Ansprüche 1 oder 2, bei der die Mittel zum Drücken eine Vielzahl von in der zylindrischen Bohrung (30) angeordneten Öffnungen (300) und pneumatische Mittel (6) zum Ansaugen oder Blasen von Luft durch die Öffnungen (300) umfassen.

4. Vorrichtung nach Anspruch 3, bei der die Mittel zum Drücken eine einzige Reihe von Öffnungen (300), die in der zylindrischen Bohrung (30) entlang einer Erzeugenden (G) angeordnet sind, und pneumatische Mittel (6) zur Ansaugung von Luft durch dieses Öffnungen (300) umfassen.

5. Vorrichtung nach Anspruch 4, bei der Mittel (7) zur Messung des stromabwärts dieser Öffnungen (300) bestehenden Luftdrucks vorgesehen sind sowie Alarmmittel (8), die von den Mitteln zur Druckmessung (7) ausgelöst werden können, wenn die Ansaugmittel (6) in Betrieb sind und der gemessene Druck einen Schwellenwert überschreitet.

6. Vorrichtung nach einem der Ansprüche 3 bis 5, bei der
- die Halterung (3) so angeordnet ist, daß die zylindrische Bohrung (30) vertikal verläuft,
- Mittel (32) vorgesehen sind, um die Halterung (3) zur Drehung mit einer konstanten Geschwindigkeit anzutreiben, und zwar derart, daß sich die zylindrische Bohrung (30) im wesentlichen um sich selbst dreht,
- Mittel (100) vorgesehen sind, um das Objekt (1) in vertikaler Position in die in Drehung befindliche zylindrische Bohrung (30) fallen zu lassen,
- Mittel (9) vorgesehen sind, um die pneumatischen Mittel (6) so zu steuern, daß sie das Objekt (1) mindestens während eines Zeitintervalls, das der Dauer einer halben Drehung der zylindrischen Bohrung (30) entspricht, festhalten, und um eine Folge von Werten für die Dicke (E) zu speichern, die für eine Folge regelmäßig innerhalb dieses Zeitintervalles verteilter Zeitpunkte ermittelt wurden.

7. Vorrichtung nach einem der Ansprüche 1 bis 6, welche Mittel (38, 351; 71-73; 76, 77) beinhaltet, die der relativen Verschiebung des Objektes (1) in bezug auf das Lichtbündel (20) dienen, und zwar gemäß einer oszillierenden Bewegung mit einer zur Achse des Objektes parallelen Richtung, um für eine Vielzahl von Querschnitten des Objektes (1) die Querabmessung zu ermitteln.

8. Vorrichtung nach Anspruch 7, bei der Mittel (32) vorgesehen sind, um die Haltemittel (3) derart zur Drehung anzutreiben, daß sich das Objekt (1) um seine Achse dreht, und die Verschiebung eine periodische oszillierende Bewegung mit einer Halbperiode ist, die im wesentlichen der Dauer einer vollständigen Drehung oder einer in dieser Dauer mehrmals ohne Rest enthaltenen Teildauer entspricht.

9. Vorrichtung nach einem der Ansprüche 7 oder 8, bei der das Lichtbündel (20) in der Richtung parallel zur Achse des Objektes (1) unbeweglich ist und die Mittel zur Verschiebung (38, 351; 71-73) die Haltemittel (3) verschieben.

10. Vorrichtung nach einem der Ansprüche 7 oder 8, bei der die Haltemittel (3) in der Richtung parallel zur Achse des Objektes (1) unbeweglich sind und die Mittel zur Verschiebung (76, 77) das Lichtbündel (20) verschieben.

11. Vorrichtung nach Anspruch 10, bei der die Mittel zur Verschiebung eine im Strahlengang des Bündels (20) angeordnete transparente Platte (77) mit parallelen Flächen umfassen sowie Mittel (76), um diese Platte (77) hin- und herzuschwenken.

## Claims

1. A device for measuring at least one transverse dimension of a substantially cylindrical object (1), comprising :
- means (2) for generating a light beam (20) of parallel rays (200) ;
- means (3) for holding said object (1) in said light beam (20) so that it produces a shadow zone (4) of a width (E) which is equal to the dimension to be measured ; and
- means (5) for measuring said width arranged to measure it along a direction perpendicular to said parallel rays (200),
said device being characterised by the fact that :
- said holding means comprises a support (3) provided with a cylindrical hole (30) through which said object (1) can pass during the measure, the height of said cylindrical hole (30) being greater than substantially one third of the height of said object (1) the generatrix of the cylindrical hole (30) having a fixed direction, and means (6,300) for pressing said object (1) against the wall of said cylindrical hole (30) such that, as a result, at least one generatrix (G) of said cylindrical hole (30) coincides with a substantial portion of a generatrix (P) of said object (1) ; and
- said means (5) for measuring width are disposed so as to measure the width (E) of the shadow zone (4) along a direction perpendicular to said generatrices (G,P).

2. A device as claimed in claim 1, in which means (32) are provided for rotating said support (3) in such a way that said cylindrical hole (30) turns substantially about itself.

3. A device as claimed in any of claims 1 or 2, in which said pressing means comprise a plurality of openings (300) in said cylindrical hole (30) and pneumatic means (6) for sucking out or blowing in air through said openings (300).

4. A device as claimed in claim 3, in which said pressing means comprise a single row of openings (300) in said cylindrical hole (30) along a generatrix (G), and pneumatic means (6) for sucking out air through said openings (300).

5. A device as claimed in claim 4, in which means (7) are provided for measuring the air pressure downstream of said openings (300), as well as alarm means (8), which can be triggered by said pressure measuring means (7) when said suction means (6) are in operation and the pressure measured exceeds a threshold value.

6. A device as claimed in any of claims 3 to 5, in which :
- said support (3) is disposed so that said cylindrical hole (30) is vertical ;
- means (32) are provided for rotating said support (3) at a constant speed in such a way that said cylindrical hole (30) turns substantially about itself ;
- means (100) are provided for dropping said object (1) in a vertical position into said rotating cylindrical hole (30) ; and
- means (9) are provided for controlling said pneumatic means (6) to hold said object (1) for at least a period of time equal to the length of half a revolution of said cylindrical hole (30), and for storing a series of values for said measured thickness (E) for a series of instants distributed at regular intervals throughout this period of time.

7. A device as claimed in any of claims 1 to 6, comprising means (38,351,71-73, 76, 77) for displacing said object (1) relative to said beam (20) in accordance with an oscillatory movement having a direction parallel to the axis of said object, in order to measure said transverse dimension for a plurality of sections of said object (1).

8. A device as claimed in claim 7, in which means (32) are provided for rotating said holding means (3) in such a way that said object (1) turns about its own axis, and said displacement is an oscillatory periodic movement of a semioscillation substantially equal to the duration of one revolution or to a sub-multiple thereof.

9. A device as claimed in either of claims 7 or 8, in which said beam (20) is stationary along said direction parallel to the axis of said object (1), and said displacement means (38,351,71-73) displace said holding means (3).

10. A device as claimed in either of claims 7 and 8, in which said holding means (3) are immobilized along said direction parallel to the axis of said object (1) and said displacement means (76,77) displace said beam (20).

11. A device as claimed in claim 10, in which said displacement means comprise a transparent, parallel-sided plate (77) which is disposed on the path of said beam (20), and means (76) for pivoting said plate (77).
